# FASCICULE DE BREVET EUROPEEN

(11) **EP 3 087 625 B1**
(45) Date de publication et mention de la délivrance du brevet: **05.09.2018**
(21) Numéro de dépôt: 14824002.1
(22) Date de dépôt: 23.12.2014
(51) Int. Cl.: H01M 2/10, H01M 2/20, B60K 1/04, H01M 2/02

(54) **SYSTÈME DE FIXATION AMOVIBLE D'UNE BATTERIE OU UN ENSEMBLE DE BATTERIES À UN VÉHICULE**
SYSTEM ZUR LÖSBAREN BEFESTIGUNG EINER BATTERIE ODER EINES BATTERIEPACKS AN EINEM FAHRZEUG
SYSTEM FOR REMOVABLY ATTACHING A BATTERY OR A BATTERY PACK TO A VEHICLE

(30) Priorité: 24.12.2013 FR 1363555
(43) Date de publication de la demande: 02.11.2016
(73) Titulaire: Commissariat à l'Energie Atomique et aux Energies Alternatives, 75015 Paris (FR)
(72) Inventeur: MARTIN, Pascal, 38100 Grenoble (FR); CARMINATI, Jean-Noël, 73100 Aix Les Bains (FR); CHATROUX, Daniel, 38470 Têche (FR); LONARDONI, Loïc, 73290 La Motte Servolex (FR)
(74) Mandataire: Cabinet Beaumont
(86) Numéro de dépôt international: PCT/EP2014/079222
(87) Numéro de publication internationale: WO 2015/097238

(56) Documents cités:
- EP-A2- 2 374 646
- WO-A2-2010/004192
- DE-B1- 2 241 548
- FR-A1- 2 954 592
- GB-A- 2 257 673

## Description

### Domaine

La présente description concerne de façon générale les systèmes de fixation d'accessoires à un véhicule automobile et, plus particulièrement, la fixation d'une batterie dans un véhicule automobile.

### Exposé de l'art antérieur

Avec le développement des véhicules électriques, les batteries occupent un volume de plus en plus important dans un véhicule automobile. Dans le passé, une batterie d'un véhicule automobile était placée, sous le capot, en étant posée sur une platine de réception et était maintenue, par un étrier ou un élastique. La connexion des bornes de la batterie au reste de l'installation électrique du véhicule s'effectuait généralement par vissage de colliers sur des cosses de la batterie.

Aujourd'hui, une telle fixation et un tel raccordement ne sont plus possibles pour une batterie de véhicule électrique. D'une part, le raccordement des batteries s'effectue désormais généralement à l'aide d'un connecteur dont une partie mâle ou femelle est portée par un boitier de la batterie et dont la partie opposée, femelle ou male, est portée par le véhicule. D'autre part, les boîtiers des batteries sont plus imposants et doivent être fixés solidement tout en restant amovibles. Ils sont donc généralement vissés.

Or, les batteries ont besoin d'être changées, que ce soit lors d'opérations de maintenance pour être remplacées, voire simplement pour être rechargées. Utiliser un système de vissage impose de préserver un accès pour un outil lors de la mise en place de la batterie. Ces zones de vissage sont souvent difficiles d'accès.

De plus, comme les éléments de fixation usuels (par exemple les vis ou boulons) doivent être accessibles de l'extérieur, ils doivent être protégés contre les salissures ou chocs, sous peine de rendre encore plus complexe le montage/démontage.

Le document FR-A-2 197 353 décrit un dispositif de montage de la batterie d'accumulateurs d'un véhicule électrique, comportant une palette amovible autoporteuse réalisée sous la forme d'un récipient appartenant à l'assemblage porteur de l'ensemble constituant le plancher du véhicule électrique dont il peut être retiré par le dessous.

Le document FR-A-2 954 594 décrit un dispositif de fixation amovible d'une batterie d'un véhicule automobile comprenant une partie supérieure comprenant un moyen de fixation sur un véhicule automobile et une partie inférieure comprenant un moyen de liaison avec la batterie, et un verrou lié à un axe de rotation et lié à un piston sur lequel agit un moyen élastique pour verrouiller et déverrouiller les deux parties supérieure et inférieure entre elles par une translation et une rotation du verrou.

Le document WO-A-2011/124700 décrit un dispositif de fixation amovible d'une batterie.

Le document FR-A-2 940 638 décrit un procédé de fixation d'une batterie sous la caisse d'un véhicule automobile.

### Résumé

Un objet d'un mode de réalisation de la présente description est de proposer un mécanisme de fixation amovible d'une batterie qui pallie tout ou partie des inconvénients des mécanismes usuels.

Un autre objet d'un mode de réalisation vise à proposer une solution ne requérant aucun espace d'accès au niveau de la batterie pour un outil lors du montage ou démontage de la batterie.

Un autre objet d'un mode de réalisation vise à proposer une solution facilitant le montage et le démontage d'une batterie.

Un autre objet d'un mode de réalisation est de proposer une solution compatible avec l'adjonction d'un système antivol à la batterie.

Ainsi, un mode de réalisation prévoit un système de fixation amovible d'un accessoire à un véhicule, comprenant :
un ou plusieurs dispositifs de fixation amovible comportant chacun : une partie femelle associée à un premier équipement parmi l'accessoire et le véhicule ; une partie mâle associée à un second équipement parmi l'accessoire et le véhicule, la partie mâle comportant un doigt saillant destiné à s'engager dans un logement de la partie femelle ; et un élément (62, 62', 69) de verrouillage en translation du doigt dans le logement, ledit doigt comportant une gorge annulaire (42) et ledit élément de verrouillage (62, 69) coopérant avec ladite gorge pour bloquer le doigt en translation dans le logement (52) ; un dispositif pneumatique d'actionnement de chaque élément de verrouillage entre une position déverrouillée où le doigt peut sortir du logement et une position verrouillée où le doigt est bloqué en translation dans le logement, un déverrouillage requérant la présence d'une clé mécanique ou électronique ; et un circuit de distribution d'un fluide entre au moins un point d'accès, accessible depuis l'extérieur de l'équipement qui contient le circuit, et la partie femelle ou la partie mâle, contenue dans cet équipement, d'au moins un dispositif de fixation, des vannes de fuite ou d'obturation étant insérées sur le circuit de distribution de fluide entre le ou les points d'accès et le ou les dispositifs de fixation,
lesdites vannes de fuite ou d'obturation étant actionnées lors d'une mise sous pression autorisée par ladite clé électronique ou mécanique.

Selon un mode de réalisation, chaque dispositif d'actionnement comporte un élément de rappel élastique vers une position verrouillée du dispositif de fixation, susceptible d'être contraint pneumatiquement vers une position déverrouillée.

Selon un mode de réalisation, l'accessoire est une batterie ou un ensemble de batteries.

Selon un mode de réalisation, l'accessoire est une roue.

Selon un mode de réalisation, un même point d'accès de fluide est partagé par plusieurs dispositifs de fixation.

Selon un mode de réalisation, ledit doigt est de section transversale circulaire.

Selon un mode de réalisation, l'élément de verrouillage est côté partie femelle.

Selon un mode de réalisation, ledit élément de verrouillage comporte une tige mue, dans ledit logement, en translation perpendiculairement à la direction longitudinale dudit doigt.

Selon un mode de réalisation, l'élément de verrouillage comporte un étrier dont des extrémités de pattes sont destinées à être engagées dans la gorge en position verrouillée.

Selon un mode de réalisation, l'élément de verrouillage est côté partie mâle et comporte au moins trois billes coplanaires maintenues dans la gorge du doigt, mobiles entre une position déverrouillée où les billes sont contenues dans la gorge et une position verrouillée où elles sortent partiellement de la gorge.

Selon un mode de réalisation, le premier équipement est le véhicule, le second équipement étant l'accessoire.

On prévoit également un équipement parmi un accessoire et un véhicule comportant des parties mâles de dispositifs de fixation amovible d'un système tel que ci-dessus, avec le circuit de distribution de fluide étant contenu dans ledit équipement. On prévoit également un équipement parmi un accessoire et un véhicule comportant des parties femelles de dispositifs de fixation amovible d'un système tel que ci-dessus, avec le circuit de distribution de fluide étant contenu dans ledit équipement.

### Brève description des dessins

La figure 1 représente, de façon très schématique, un mode de réalisation d'un système de fixation d'une batterie dans un véhicule automobile ;
la figure 2 est une vue en coupe schématique et simplifiée d'une batterie et du système de fixation de celle-ci ;
la figure 3 représente, de façon très schématique et sous forme de blocs, un mode de réalisation d'un système de fixation d'une batterie ;
la figure 4 illustre, de façon très schématique, un mode de réalisation d'une station de recharge d'une batterie ;
les figures 5A et 5B sont des vues en perspective représentant schématiquement un mode de réalisation d'un dispositif de fixation du système de la figure 2, respectivement en position verrouillée et en position déverrouillée ;
les figures 6A et 6B sont des vues en perspective représentant schématiquement un autre mode de réalisation d'un dispositif de fixation du système de la figure 2, respectivement en position verrouillée et en position déverrouillée ;
les figures 7A et 7B sont des vues en coupe représentant schématiquement un autre mode de réalisation d'un dispositif de fixation du système de la figure 2, respectivement en position verrouillée et en position déverrouillée ;
les figures 8A et 8B sont des vues en coupe représentant schématiquement un autre mode de réalisation d'un dispositif de fixation du système de la figure 2, respectivement en position verrouillée et en position déverrouillée ; et
la figure 9 illustre, de façon très schématique un autre exemple d'application de dispositifs de fixation.

### Description détaillée

De mêmes éléments ont été désignés par de mêmes références aux différentes figures. Par souci de clarté, seuls les éléments utiles à la compréhension des modes de réalisation qui vont être décrits ont été représentés et seront détaillés. En particulier, la constitution d'une batterie, d'un bloc batterie ou d'un ensemble de batteries auxquels s'appliquent les modes de réalisation qui vont être décrits n'ont pas été détaillés, les modes de réalisation décrits étant compatibles avec les batteries ou ensemble de batteries usuels.

Pour simplifier, les modes de réalisation seront décrits par la suite en relation avec un exemple d'application à un véhicule automobile. Toutefois, sauf précision contraire, tout ce qui sera décrit par la suite s'applique plus généralement à toute batterie devant être fixée ou maintenue en place dans un véhicule, qu'il s'agisse d'un deux roues, d'une voiture, d'un véhicule de transport en commun, d'un avion, d'un navire, etc.

De même, les modes de réalisation seront décrits par la suite en relation avec un exemple d'application à une batterie. Toutefois, sauf précision contraire, tout ce qui sera décrit par la suite s'applique plus généralement à tout accessoire devant être fixé ou maintenu en place de façon amovible sur ou dans un véhicule, par exemple les roues du véhicule.

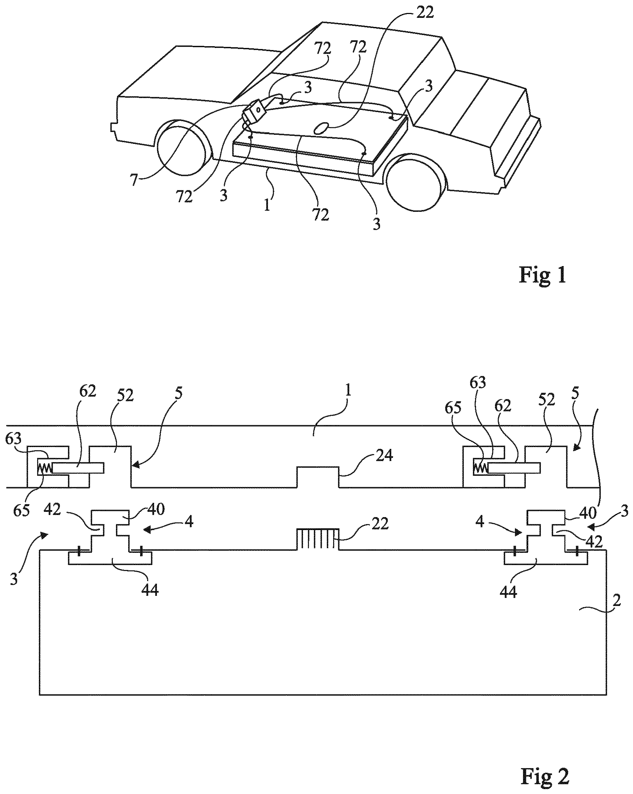

La figure 1 est une représentation schématique en perspective d'un véhicule automobile, équipé d'une batterie ou d'un ensemble de batteries 2, par exemple placé sous le plancher du véhicule et accessible depuis le dessous du véhicule, depuis l'extérieur.

Traditionnellement, les batteries équipant ainsi les véhicules sont boulonnées à celui-ci et un connecteur 22 raccorde la batterie à l'installation électrique du véhicule (non représentée).

La figure 2 représente une vue en coupe schématique d'un mode de réalisation d'un système de fixation amovible d'une batterie 2 à un support 1, par exemple le châssis d'un véhicule.

Pour simplifier la description, on se réfèrera par la suite à une batterie 2. Toutefois, tout ce qui va être décrit s'applique plus généralement à un pack batteries, c'est-à-dire à un boîtier contenant une ou plusieurs batteries.

Le système de fixation comporte plusieurs dispositifs 3 ou mécanismes de fixation, chacun constitué d'une partie mâle 4, dans l'exemple représenté côté batterie, et d'une partie femelle 5, dans l'exemple représenté côté support 1 de batterie (ici le véhicule) . On peut envisager un seul dispositif par batterie mais, pour des questions de poids, et de tenue, on préfèrera utiliser plusieurs dispositifs.

La partie mâle 4 est constituée d'un doigt 40, saillant de la surface de la batterie 2 (en pratique de son boîtier). La batterie est destinée à être, au moins partiellement, en contact avec une paroi du support 1. Le doigt 40 comporte une gorge annulaire 42 destinée à participer au verrouillage. La partie mâle 4 est fixée au boîtier de la batterie de façon permanente par exemple en étant collé, soudé ou vissé à celui-ci par l'intermédiaire d'une platine de fixation 44. On peut également prévoir que, dans certains modes de réalisation, le doigt 40 soit directement moulé ou usiné avec le boîtier, si la résistance mécanique de celui-ci le permet.

Côté support 1, chaque partie femelle 5 comporte un logement 52 de réception d'un doigt 40 d'une partie mâle et, dans cet exemple, un élément de verrouillage 62, destiné à coopérer avec la gorge 42 du doigt 40 pour verrouiller en translation le doigt dans le logement 52.

Dans l'exemple de la figure 2, on suppose que l'élément de verrouillage est formé d'une tige 62 mue en translation perpendiculairement à la direction longitudinale du doigt 40 (mue horizontalement dans l'orientation de la figure) . De préférence, la position de repos de la tige 62 est une position verrouillée dans laquelle elle sort dans le logement 52 pour s'engager dans la gorge 42 (fonction symbolisée par un ressort 65 entre la base de la tige 62 et le fond d'un conduit 63). Un mécanisme d'actionnement de la tige 62 permet de provoquer une rétractation dans le conduit 63, hors du logement 52, pour libérer le doigt 40.

Selon un mode de réalisation préféré, tous les mécanismes d'actionnement des tiges 62 sont commandables de façon centralisée depuis une centrale 7 (figure 1) de commande, reliée (liaisons 72) à chacun des dispositifs de fixation 3 de la batterie. Dans l'exemple de la figure 1, on suppose une batterie 2, fixée à l'aide de quatre dispositifs 3. Ce nombre peut varier en fonction notamment du poids et du volume de la batterie.

Comme l'illustre la figure 2, le connecteur 22 équipant la batterie est destiné à être raccordé électriquement à une partie correspondante 24 du châssis du véhicule, connectée aux équipements exploitant l'énergie de la batterie.

Dans le mode de réalisation des figures 1 et 2, les parties mâles sont côté batterie et les parties femelles sont côté support. Bien que l'inverse soit possible, cela présente l'avantage, notamment pour une batterie placée sous le véhicule, que les logements 52 ne risquent pas de se remplir d'impuretés. De plus, l'équipement manipulé étant la batterie, cela facilita sa mise en place. En outre, comme cela ressortira mieux de la description suivante, cela facilite une commande centralisée côté véhicule. En variante, on pourra également prévoir une fixation latérale sur un support, les doigts de fixation étant alors horizontaux.

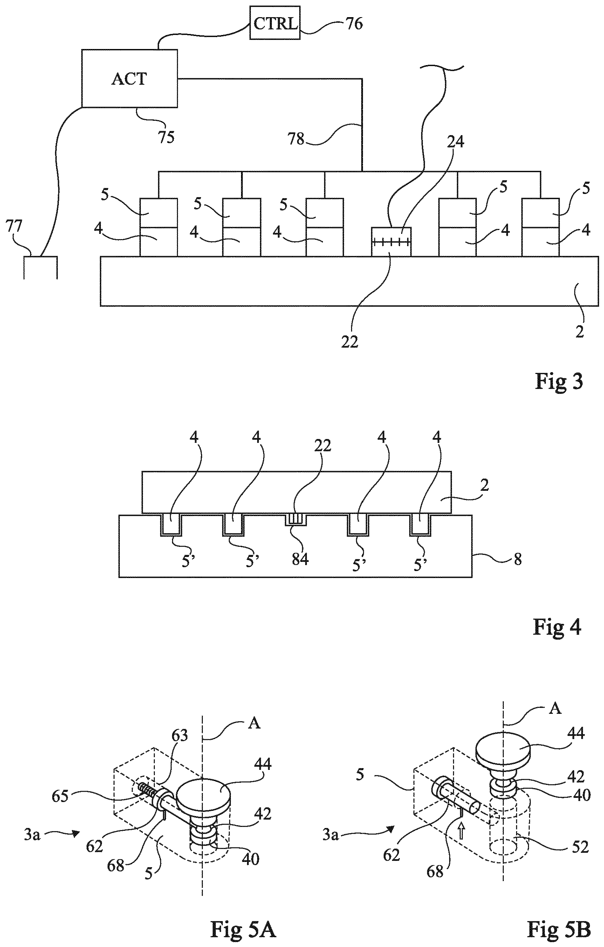

La figure 3 est une représentation schématique et sous forme de blocs d'un système de fixation amovible d'une batterie illustrant son fonctionnement. Les différents éléments de verrouillage (figure 2) associés aux parties femelles 5 sont, de préférence, commandés simultanément par un actionneur commun 75 (ACT) lui-même déclenché par un circuit de commande 76 (CTRL).

L'actionnement des éléments de verrouillage est pneumatique. L'actionnement pneumatique est préféré pour sa simplicité et l'absence de fluide autre que de l'air.

Une réalisation pneumatique présente l'avantage que des compresseurs d'air sont généralement présents dans les garages automobiles ou à proximité des stations de recharge et qu'il suffit alors à l'utilisateur de connecter une amenée d'air comprimé à une prise 77 prévue alors au niveau du véhicule (par exemple au niveau de son châssis) pour fournir l'énergie nécessaire à l'actionnement du système de fixation. Des conduites pneumatiques 78 répartissent alors l'air comprimé depuis l'actionneur 75 jusqu'aux dispositifs de fixation.

De plus, un actionnement pneumatique présente l'avantage d'être particulièrement adapté aux forces requises pour déverrouiller le dispositif. En particulier, un système électrique requerrait d'embarquer, à proximité de chaque dispositif de fixation, un moteur électrique, un engrenage, etc. Outre l'encombrement et la complexité, ces éléments risquent de se gripper.

Avec un système pneumatique, les tuyaux d'amenée de fluide peuvent être peu encombrants. De plus, une telle solution est compatible avec une commande centralisée, que ce soit par exemple en équipant le véhicule d'un compresseur ou en prévoyant, pour chaque dispositif ou pour plusieurs dispositifs à la fois, une prise pneumatique 77 ou point d'accès, accessible depuis l'extérieur du véhicule, par exemple pour y brancher la sortie d'air d'un compresseur quand on souhaite démonter la batterie. Le besoin d'embarquer un compresseur peut en effet être vu comme peu commode. Or, dans la mesure où le fluide n'est pas requis au repos mais est seulement requis pour le démontage, la solution décrite est particulièrement adaptée. En variante, dans une solution pneumatique, une simple pompe à main ou à pied branchée à cette prise peut suffire.

L'utilisation d'un élément 76 de commande commun permet, selon un mode de réalisation préféré, de lier la libération de la batterie 2 à un mécanisme antivol. Par exemple, l'actionneur 75 ne peut être déclenché que si la clé (électronique ou mécanique) du véhicule est présente pour déclencher le circuit de commande 76.

Dans une réalisation où l'actionneur est pneumatique, avec une prise accessible de l'extérieur, l'actionnement lui-même participe à la fonction antivol dans la mesure où le déverrouillage requiert un élément d'injection de fluide ou d'air.

La figure 4 illustre, de façon très schématique, un exemple de réalisation d'une station 8 de recharge d'une batterie 2. Selon ce mode de réalisation préféré, la station 8 de recharge est également équipée de parties femelle 5' de dispositifs de fixation, de façon à pouvoir recevoir et verrouiller une batterie 2. La station de charge 8 comporte en quelque sorte un support de batterie du même type que celui équipant le véhicule.

La batterie est alors rapportée au niveau de sa station 8 et son connecteur 22 est relié à un élément d'alimentation 84 de la station de recharge pour que la batterie soit rechargée.

On voit apparaître un avantage induit de l'utilisation du système de fixation amovible prévu dans la présente description qui est que la recharge de la batterie est également associée à un système antivol de façon à garantir que seul le possesseur de la batterie ou un utilisateur autorisé soit en mesure de la libérer d'une station de recharge.

On notera que les dispositifs côté véhicule et côté station de recharge peuvent être différents les uns des autres, que ce soit dans leurs structures ou dans leurs systèmes d'actionnement, pourvu qu'ils soient compatibles avec les doigts équipant, par exemple, la batterie. De même, les dispositifs équipant différents véhicules peuvent être différents les uns des autres pourvu qu'ils soient compatibles avec la partie portée par les batteries.

On peut ainsi standardiser un ensemble de batteries susceptible d'être utilisé dans différents véhicules automobiles.

Un avantage du système de fixation est que les dispositifs de fixation 3 sont, quand la batterie est verrouillée sur le support, inaccessibles. Non seulement, cela les protège mécaniquement contre des chocs, mais cela participe également à la sécurité contre le vol. En particulier, la pièce mécanique assurant le déverrouillage n'est pas accessible de l'extérieur, seul le fluide sous pression permet d'opérer le déverrouillage.

Selon l'invention, on adjoint aux circuits de fluide une ou plusieurs vannes "de fuite", c'est-à-dire des vannes qui, dans leur état de repos, ouvrent le circuit de fluide de sorte qu'il est impossible de faire monter la pression pour déverrouiller les dispositifs de fixation. Ces vannes sont fermées lors d'une mise sous pression autorisée au moyen d'une clé électrique ou mécanique. En variante, des relais/vannes obturent au repos la conduite entre la prise 77 et le ou les dispositifs de fixation.

Bien que l'utilisation d'un connecteur électrique 22 distinct des dispositifs de fixation soit préférée, on pourra prévoir en variante que le raccordement électrique passe par un ou plusieurs dispositifs de fixation.

Les figures 5A et 5B illustrent un premier exemple de réalisation d'un dispositif de fixation 3a. La figure 5A représente le dispositif en position verrouillée (fermée). La figure 5B représente le dispositif en fonction déverrouillée (ouverte). On notera que l'orientation du dispositif aux figures 3A et 3B est inversée par rapport à celui de la figure 2, c'est-à-dire que la partie mâle 4 est en partie supérieure alors que la partie femelle 5 est en partie inférieure. Cela ne change rien au fonctionnement.

Dans l'exemple des figures 5A et 5B, une tige 62 est susceptible d'être mue en translation dans un conduit 63 équipant la partie femelle de façon à venir s'engager dans la gorge 42 du doigt selon une direction coupant l'axe A du doigt 40. Par exemple, la tige 62 agit à la manière de la tige d'un vérin et l'amenée d'air dans une réalisation pneumatique se situe dans la partie avant de la tige 62 de façon à contraindre celle-ci contre par exemple l'action d'un ressort 65 prévu entre le fond du conduit 63 et une tête de la tige 62. D'autres réalisations sont envisageables pour l'actionnement.

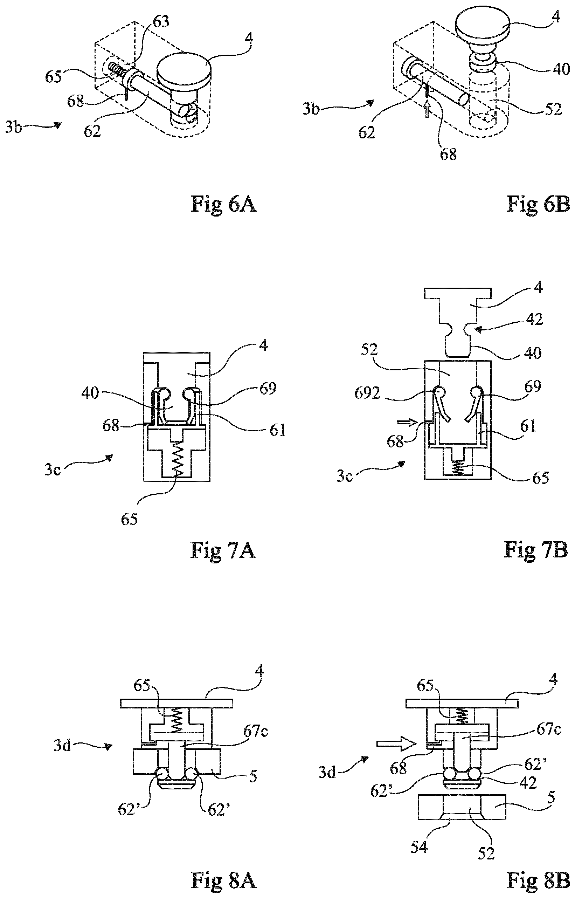

Les figures 6A et 6B sont des vues en perspective, respectivement en position verrouillée et en position déverrouillée, d'un autre mode de réalisation d'un dispositif de fixation 3b. Par rapport au mode de réalisation des figures 5A et 5B, la différence est que la tige 62 de l'élément de verrouillage est mue selon une direction tangentielle au doigt 4. Cela améliore la tenue et en particulier réduit les risques de décalage du connecteur électrique de la batterie suite aux vibrations. Le reste est similaire au mode de réalisation des figures 5A et 5B.

Les figures 7A et 7B représentent, de façon schématique, par des vues en perspective, respectivement en position fermée et en position ouverte, encore un autre mode de réalisation d'un dispositif de fixation 3c comportant un étrier 69 dont des extrémités de pattes 692 sont susceptibles d'être engagées dans la gorge 42 du doigt 4. L'actionneur est coaxial au logement 5 et est constitué d'un fourreau 61 mu en translation permettant de rabattre les pattes de l'étrier 69 vers le doigt 4 (figure 7A).

Les figures 8A et 8B sont des vues en coupe, respectivement en position verrouillée et en position déverrouillée, d'encore un autre mode de réalisation d'un dispositif de fixation 3d. Par rapport aux autres modes de réalisation, les éléments de verrouillage sont côté partie mâle et non côté partie femelle. Par exemple, des billes 62' sont logées dans la gorge 42 du doigt 40 et sont actionnées par un piston 67 axial, intégré au doigt 4, entre une position (figure 8A) où elles sortent partiellement de la gorge et une position (figure 8B) où elles ne dépassent pas de la gorge. Ainsi, le doigt 4 peut être engagé dans le logement 5 qui, dans ce mode de réalisation, comporte un élargissement 54 dans lequel les billes 62', en position sortie, verrouillent le doigt en translation dans le logement. Ce mode de réalisation est par exemple destiné au cas où les doigts sont portés par le support de batterie. En effet, cela permet que les éléments de commande du verrouillage (pneumatique ou électrique) soient côté support et non côté batterie.

Les différents modes de réalisation illustrés ci-dessus ne constituent que des exemples et d'autres dispositifs de fixation similaires pourront être prévus.

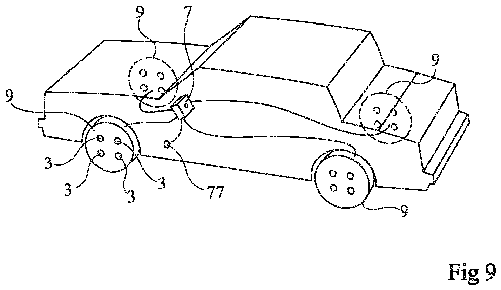

La figure 9 représente, de façon très schématique, un autre mode de réalisation dans lequel l'accessoire est une roue du véhicule. Des dispositifs de fixation 3 équipent alors chaque roue 8 du véhicule, par exemple, en prévoyant quatre dispositifs par roue. En variante, ou pourra prévoir un verrouillage unique par roue au niveau du centre du moyeu.

En figure 9, on a représenté schématiquement une prise 77 reliée à la centrale 7. Selon un mode de réalisation, cette centrale 7 est en fait un répartiteur d'air provenant de la prise 77 dans les différents dispositifs 3.

Un avantage des modes de réalisation qui ont été décrits est qu'il est désormais possible de simplifier la fixation amovible d'une batterie à un véhicule automobile.

Un autre avantage est que ces modes de réalisation peuvent aisément être complétés par un système antivol.

Un autre avantage est que le même système de fixation amovible peut être utilisé côté station de recharge de batterie.

Divers modes de réalisation ont été décrits. Diverses variantes et modifications apparaîtront à l'homme de l'art. En particulier, le choix du nombre de dispositifs de fixation par batterie ainsi que le mode d'actionnement des éléments de verrouillage (pneumatiques ou électriques) dépend de l'application. Par ailleurs, la mise en oeuvre pratique des modes de réalisation qui ont été décrits est à la portée de l'homme du métier à partir des indications fonctionnelles données ci-dessus. En particulier, le choix des matériaux (plastique, métal composite) pour réaliser les dispositifs de fixation peut varier. De plus, les dimensions à donner aux dispositifs de fixation dépendent, entre autres, du poids de la batterie. Par exemple, des doigts 40 ayant des diamètres compris 5 mm et 2 cm constituent un bon compromis. De même, la longueur des doigts dépend de l'application et en particulier des formes de la batterie et du support.

## Revendications

1. Système de fixation amovible d'un accessoire (2) à un véhicule, comprenant :
un ou plusieurs dispositifs de fixation amovible (3) comportant chacun : une partie femelle (5) associée à un premier équipement parmi l'accessoire et le véhicule ; une partie mâle (4) associée à un second équipement parmi l'accessoire et le véhicule, la partie mâle comportant un doigt (40) saillant destiné à s'engager dans un logement (52) de la partie femelle ; et un élément (62, 62', 69) de verrouillage en translation du doigt dans le logement, ledit doigt comportant une gorge annulaire (42) et ledit élément de verrouillage (62, 69) coopérant avec ladite gorge pour bloquer le doigt en translation dans le logement (52) ;
un dispositif pneumatique d'actionnement de chaque élément de verrouillage (62, 62', 69) entre une position déverrouillée où le doigt (40) peut sortir du logement (52) et une position verrouillée où le doigt est bloqué en translation dans le logement, un déverrouillage requérant la présence d'une clé mécanique ou électronique ; et
un circuit de distribution d'un fluide entre au moins un point d'accès (77), accessible depuis l'extérieur de l'équipement qui contient le circuit, et la partie femelle ou la partie mâle, contenue dans cet équipement, d'au moins un dispositif de fixation, des vannes de fuite ou d'obturation étant insérées sur le circuit de distribution de fluide entre le ou les points d'accès et le ou les dispositifs de fixation,
lesdites vannes de fuite ou d'obturation étant actionnées lors d'une mise sous pression autorisée par ladite clé électronique ou mécanique.

2. Système selon la revendication 1, dans lequel un même point d'accès (77) de fluide est partagé par plusieurs dispositifs de fixation.

3. Système selon la revendication 1 ou 2, dans lequel chaque dispositif d'actionnement comporte un élément de rappel élastique vers une position verrouillée du dispositif de fixation, susceptible d'être contraint pneumatiquement vers une position déverrouillée.

4. Système selon l'une quelconque des revendications 1 à 3, dans lequel l'accessoire est une batterie ou un ensemble de batteries.

5. Système selon l'une quelconque des revendications 1 à 3, dans lequel l'accessoire est une roue.

6. Système selon l'une quelconque des revendications 1 à 5, dans lequel ledit doigt (40) est de section transversale circulaire.

7. Système selon l'une quelconque des revendications 1 à 6, dans lequel l'élément de verrouillage (62, 69) est côté partie femelle.

8. Système selon la revendication 7, dans lequel ledit élément de verrouillage comporte une tige (62) mue, dans ledit logement (52), en translation perpendiculairement à la direction longitudinale dudit doigt (40).

9. Système selon la revendication 7, dans lequel l'élément de verrouillage comporte un étrier (69) dont des extrémités de pattes sont destinées à être engagées dans la gorge (42) en position verrouillée.

10. Système selon l'une quelconque des revendications 1 à 6, dans lequel l'élément de verrouillage (62, 69) est côté partie mâle (4) et comporte au moins trois billes coplanaires maintenues dans la gorge du doigt (40), mobiles entre une position déverrouillée où les billes sont contenues dans la gorge et une position verrouillée où elles sortent partiellement de la gorge.

11. Système selon l'une quelconque des revendications 1 à 10, dans lequel le premier équipement est le véhicule, le second équipement étant l'accessoire (2).

12. Equipement parmi un accessoire (2) et un véhicule comportant des parties mâles (4) de dispositifs de fixation amovible d'un système selon l'une quelconque des revendications 1 à 11, sachant que le circuit de distribution de fluide dudit système est contenu dans ledit équipement.

13. Equipement parmi un accessoire (2) et un véhicule comportant des parties femelles (5) de dispositifs de fixation amovible d'un système selon l'une quelconque des revendications 1 à 11, sachant que le circuit de distribution de fluide dudit système est contenu dans ledit équipement.

## Patentansprüche

1. Ein System zum entfernbaren Anbringen eines Zusatzteils (2) an ein Fahrzeug, das Folgendes aufweist:
ein oder mehr entfernbare Anbringungsvorrichtungen (3), wobei jede Folgendes aufweist: ein Aufnahmeteil (5), das mit einem ersten Ausstattungsteil aus dem Zusatzteil und dem Fahrzeug assoziiert ist; ein Steckteil (4), das mit einem zweiten Ausstattungsteil aus dem Zusatzteil und dem Fahrzeug assoziiert ist, wobei der Steckteil einen vorstehenden Finger (40) aufweist, der zum Eingriff in eine Ausnehmung (52) des Aufnahmeteils vorgesehen ist; und ein Element (62, 62', 69) zum translatorischen Verriegeln des Fingers in der Ausnehmung, wobei der Finger eine ringförmige Nut (42) aufweist und das Verriegelungselement (62, 69) mit der Nut kooperiert, um den Finger translatorisch in der Ausnehmung (52) zu verriegeln;
eine pneumatische Vorrichtung zum Betätigen jedes Verriegelungselements (62, 62', 69) zwischen einer entriegelten Position, in der der Finger (40) aus der Ausnehmung (52) herauskommen kann, und einer verriegelten Position, in der der Finger in der Ausnehmung translatorisch verriegelt ist, wobei ein Entriegeln die Gegenwart eines mechanischen oder elektronischen Schlüssels erfordert; und
eine Schaltung zum Verteilen eines Fluides zwischen wenigstens einem Zugangspunkt (77), zugänglich von der Außenseite des Ausstattungsteils, das die Schaltung enthält, und dem Aufnahmeteil oder dem Steckteil, der in diesem Ausstattungsteil enthalten ist, von wenigstens einer Anbringungsvorrichtung, wobei Leckage- oder Schließventile in der Fluidverteilschaltung zwischen dem bzw. den Zugangspunkt/en und der bzw. den Anbringungsvorrichtung/en eingeführt sind,
wobei die Leckage- oder Schließventile während einer Druckerzeugung, die von dem elektronischen oder mechanischen Schlüssel autorisiert sind, betätigt werden.

2. System nach Anspruch 1, wobei ein gleicher Fluidzugangspunkt (77) von einer Vielzahl von Anbringungsvorrichtungen geteilt wird.

3. System nach Anspruch 1 oder 2, wobei jede Betätigungsvorrichtung ein Element zur elastischen Rückkehr hin zu einer verriegelten Position der Anbringungsvorrichtung aufweist, die geeignet ist, pneumatisch in eine entriegelte Position vorgespannt zu werden.

4. System nach einem der Ansprüche 1 bis 3, wobei das Zusatzteil eine Batterie oder eine Batterieanordnung ist.

5. System nach einem der Ansprüche 1 bis 3, wobei das Zusatzteil ein Rad ist.

6. System nach einem der Ansprüche 1 bis 5, wobei der Finger (40) einen Kreisquerschnitt besitzt.

7. System nach einem der Ansprüche 1 bis 6, wobei das Verriegelungselement (62, 69) an der Aufnahmeteilseite angeordnet ist.

8. System nach Anspruch 7, wobei das Verriegelungselement eine Stange (62) aufweist, die translatorisch senkrecht zu der Längsrichtung des Fingers (40) in der Ausnehmung (52) bewegt wird.

9. System nach Anspruch 7, wobei das Verriegelungselement eine Klammer (69) aufweist, welche Arm-Enden besitzt, die vorgesehen sind, um in der verriegelten Position mit der Nut (42) in Eingriff zu kommen.

10. System nach einem der Ansprüche 1 bis 6, wobei das Verriegelungselement (62, 69) an der Seite des Steckteils (4) angeordnet ist und wenigstens drei koplanare Bälle enthält, welche in der Nut des Fingers (40) gehalten werden, und zwar beweglich zwischen einer entriegelten Position, in der die Bälle in der Nut enthalten sind, und einer verriegelten Position, in der sie teilweise aus der Nut herauskommen.

11. System nach einem der Ansprüche 1 bis 10, wobei das erste Ausstattungsteil das Fahrzeug ist und das zweite Ausstattungsteil das Zusatzteil (2) ist.

12. Ein Ausstattungsteil aus einem Zusatzteil (2) und einem Fahrzeug, das Steckteile (4) aufweist, von Vorrichtungen zum entfernbaren Anbringen des Systems nach einem der Ansprüche 1 bis 11, im Wissen, dass die Fluidverteilschaltung des Systems in dem Ausstattungsteil enthalten ist.

13. Ein Ausstattungsteil aus einem Zusatzteil (2) und einem Fahrzeug, das Aufnahmeteile (5) aufweist, von Vorrichtungen zum entfernbaren Anbringen des Systems nach einem der Ansprüche 1 bis 11, im Wissen, dass die Fluidverteilschaltung des Systems in dem Ausstattungsteil enthalten ist.

## Claims

1. A system for removably attaching an accessory (2) to a vehicle, comprising:
one or a plurality of removable attachment devices (3), each comprising: a female portion (5) associated with a first equipment item among the accessory and the vehicle; a male portion (4) associated with a second equipment item from among the accessory and the vehicle, the male portion comprising a protruding finger (40) intended to engage into a recess (52) of the female portion; and an element (62, 62', 69) for translatably locking the finger in the recess, said finger comprising a ringshaped groove (42) and said locking element (62, 69) cooperating with said groove to translatably lock the finger in the recess (52);
a pneumatic device for actuating each locking element (62, 62', 69) between an unlocked position where the finger (40) may come out of the recess (52) and a locked position where the finger is translatably locked in the recess, an unlocking requiring the presence of a mechanical or electronic key; and
a circuit for distributing a fluid between at least one access point (77), accessible from the outside of the equipment item containing the circuit, and the female portion or the male portion, contained in this equipment item, of at least one attachment device, leak or closure valves being inserted in the fluid distribution circuit between the access point(s) and the attachment device(s),
said leak or closure valves being actuated during a pressurization authorized by said electronic or mechanical key.

2. The system of claim 1, wherein a same fluid access point (77) is shared by a plurality of attachment devices.

3. The system of claim 1 or 2, wherein each actuation device comprises an element of resilient return towards a locked position of the attachment device, capable of being pneumatically biased to an unlocked position.

4. The system of any of claims 1 to 3, wherein the accessory is a battery or a battery assembly.

5. The system of any of claims 1 to 3, wherein the accessory is a wheel.

6. The system of any of claims 1 to 5, wherein said finger (40) has a circular cross-section.

7. The system of any of claims 1 to 6, wherein the locking element (62, 69) is located on the female portion side.

8. The system of claim 7, wherein said locking element comprises a rod (62) translatably moved, in said recess (52), perpendicularly to the longitudinal direction of said finger (40) .

9. The system of claim 7, wherein the locking element comprises a bracket (69) having arm ends intended to be engaged into the groove (42) in locked position.

10. The system of any of claims 1 to 6, wherein the locking element (62, 69) is located on the side of the male portion (4) and comprises at least three coplanar balls maintained in the groove of the finger (40), mobile between an unlocked position where the balls are contained in the groove and a locked position where they partially come out of the groove.

11. The system of any of claims 1 to 10, wherein the first equipment item is the vehicle, the second equipment item being the accessory (2).

12. An equipment item from among an accessory (2) and a vehicle comprising male portions (4) of devices for removably attaching the system of any of claims 1 to 11, knowing that the fluid distribution circuit of said system is contained in said equipment item.

13. An equipment item from among an accessory (2) and a vehicle comprising female portions (5) of devices for removable removably attaching the system of any of claims 1 to 11, knowing that the fluid distribution circuit of system is contained in said equipment item.
